# EUROPEAN PATENT APPLICATION

(11) **EP 4 614 402 A1**
(43) Date of publication of application: **10.09.2025**
(21) Application number: 22964455.4
(22) Date of filing: 04.11.2022
(51) Int. Cl.: G06N 10/70

(54) **SIMULATION PROGRAM, SIMULATION METHOD, AND INFORMATION PROCESSING DEVICE**

(71) Applicant: FUJITSU LIMITED, Kawasaki-shi, Kanagawa 211-8588 (JP)
(72) Inventor: FUJISAKI, Jun, Kawasaki-shi, Kanagawa 211-8588 (JP)
(74) Representative: Haseltine Lake Kempner LLP
(86) International application number: PCT/JP2022/041119
(87) International publication number: WO 2024/095438

(57) **Abstract**

To improve the efficiency of calculating the probability of a logical error occurrence.

An information processing apparatus (10) generates error patterns (2 to 4) each indicating one or more first data qubits to which errors are introduced among a plurality of data qubits in a two-dimensional lattice where the data qubits and a plurality of ancilla qubits are alternately arranged in each of a row and a column direction; determines whether the first data qubits indicated by the error patterns (2 to 4) satisfy a predetermined determination criterion; determines, when the criterion is satisfied, that a logical error does not occur in the error patterns (2 to 4); and determines, when the criterion is not satisfied, whether the logical error occurs based on error detection information where ancilla qubits adjacent, in the row or column direction, to the first data qubits indicated in the error patterns (2 to 4) have flipped states.

## Description

### Technical Field

The embodiments discussed herein relate to a simulation program, a simulation method, and an information processing apparatus for quantum bit error correction.

### Background Art

Computation of a quantum computer is realized by performing initialization, gate operations, and measurement processing on a plurality of quantum bits, or qubits. In the quantum computer, errors (physical errors) occur on the qubits due to environmental noise or the like during the aforementioned operations on the qubits. Therefore, in the quantum computer, in order to identify error qubits and error details, qubit redundancy is performed as in a classical computer (also called a von Neumann computer).

A surface code is one of methods for identifying error qubits and error details using redundant qubits. In the surface code, data qubits and ancilla qubits are alternately arranged in a two-dimensional lattice. The states of the data qubits among a plurality of qubits (the data qubits and the ancilla qubits) arranged in a lattice are encoded into one logical qubit. The ancilla qubits for each column are used either for X error detection or Z error detection. When performing surface code quantum computation, a quantum computer first initializes a logical quantum state appropriately. Then, upon error detection, the quantum computer performs a gate operation between each ancilla qubit and its surrounding four data qubits, and measures the ancilla qubits. The quantum computer detects X errors or Z errors based on the values of the ancilla qubits. Subsequently, the quantum computer performs gate operations of qubit error correction using information indicating the type of errors and location information of data qubits identified as error locations.

As an error correction technique, for example, a quantum error correction method has been proposed that includes a step of correcting a stream of syndrome measurements generated by a quantum computer. In addition, there is a proposed technique for optimizing physical parameters in fault-tolerant quantum computing for reducing frequency congestion.

### Citation List

### Patent Literature

Patent Literature 1: Japanese National Publication of International Patent Application No. 2020-535690
Patent Literature 2: Japanese National Publication of International Patent Application No. 2020-515970

### Summary of Invention

### Technical Problem

When errors occur on a predetermined number or more of qubits among a plurality of qubits constituting one logical qubit, error correction may fail even if a surface code is used. An error correction failure like this is called a logical error.

In the surface code, the probability of a logical error occurrence changes according to the number of qubits in a two-dimensional lattice representing one logical qubit. The probability of a logical error occurrence may also vary depending on the occurrence rate of qubit errors due to environmental noise or the like. Therefore, in order to evaluate the performance of quantum error correction by the surface code, it may be considered to run a simulation of the error correction by the surface code using a classical computer. In an actual machine of a quantum computer, it is not possible to determine whether a logical error has occurred unless data qubits themselves are measured. However, in a simulation, error locations are known in advance. Therefore, by running a simulation of the error correction using the surface code under a predetermined condition, it is possible to determine whether a logical error occurs under the condition.

In the error correction simulation, the probability of a logical error occurrence is evaluated as the performance of an error correction code. For example, N error patterns (N is a natural number) are generated, and each of the generated error patterns goes through decoding (a process of identifying error locations) and a process of determining whether a logical error occurs based on the error pattern and the decoding results. When the total number of logical error occurrences is m (m is an integer of 0 or more), the probability of a logical error occurrence is obtained by m/N. N is generally a very large value of 10,000 to 1,000,000 in order to reduce the influence of statistical errors. Thus, since a lot of decoding is performed to calculate the probability of a logical error occurrence, the calculation time is prolonged.

One aspect aims to improve the efficiency of calculating the probability of a logical error occurrence.

### Solution to Problem

According to one aspect, a simulation program is provided that causes a computer to execute the following processes.

The computer generates error patterns indicating one or more first data qubits to which errors are introduced among a plurality of data qubits included in a two-dimensional lattice in which the plurality of data qubits and a plurality of ancilla qubits are alternately arranged in each of a row direction and a column direction. The computer determines whether the first data qubits indicated by the error pattern satisfy a predetermined determination criterion. The computer determines, when the first data qubits satisfy the predetermined determination criterion, that a logical error does not occur in the error pattern. Then, the computer determines, when the first data qubits fail to satisfy the predetermined determination criterion, whether the logical error occurs based on error detection information in which ancilla qubits adjacent, in the row direction or the column direction, to the first data qubits indicated in the error pattern have flipped states.

### Advantageous Effects of Invention

According to one aspect, it is possible to improve the efficiency of calculating the probability of a logical error occurrence.

The above and other objects, features and advantages of the present invention will become apparent from the following description taken in conjunction with the accompanying drawings which illustrate, by way of example, preferred embodiments of the invention.

### Brief Description of Drawings

FIG. 1 illustrates an example of a simulation method according to a first embodiment;
FIG. 2 illustrates an example of hardware of a computer that executes a surface code simulation;
FIG. 3 illustrates an example of an error occurrence situation in a qubit;
FIG. 4 illustrates an example of qubit redundancy;
FIG. 5 illustrates an example of a configuration of qubits for performing a surface code;
FIG. 6 illustrates an example of measurement results of ancilla qubits when errors have occurred;
FIG. 7 illustrates an example of error correction by the surface code;
FIG. 8 illustrates an example of being unable to identify error locations;
FIG. 9 illustrates an example of a logical error due to erroneous correction;
FIG. 10 illustrates an example of a relationship between a physical error probability and a logical error probability;
FIG. 11 illustrates an example of an error pattern;
FIG. 12 is a block diagram illustrating functions of the computer for performing the surface code simulation;
FIG. 13 illustrates an example of determining whether to skip decoding;
FIG. 14 is a flowchart illustrating an example of a procedure of a logical error (Z error) probability calculating process;
FIG. 15 is a flowchart illustrating details of a procedure of a logical error (Z error) occurrence determining process;
FIG. 16 is a flowchart illustrating an example of a procedure of a logical error (X error) probability calculating process;
FIG. 17 is a flowchart illustrating details of a procedure of a logical error (X error) occurrence determining process;
FIG. 18 illustrates an example of measurement results of calculation time;
FIG. 19 illustrates an example of results of decoding counts;
FIG. 20 illustrates an example of calculation results of logical error probabilities; and
FIG. 21 illustrates an example of probabilities of a logical error occurrence when each determination criterion is satisfied.

### Description of Embodiments

Hereinafter, embodiments will be described with reference to the drawings. These embodiments may be combined with each other unless they have contradictory features.

### First Embodiment

A first embodiment is a simulation method capable of efficiently determining whether a logical error occurs in quantum error correction.

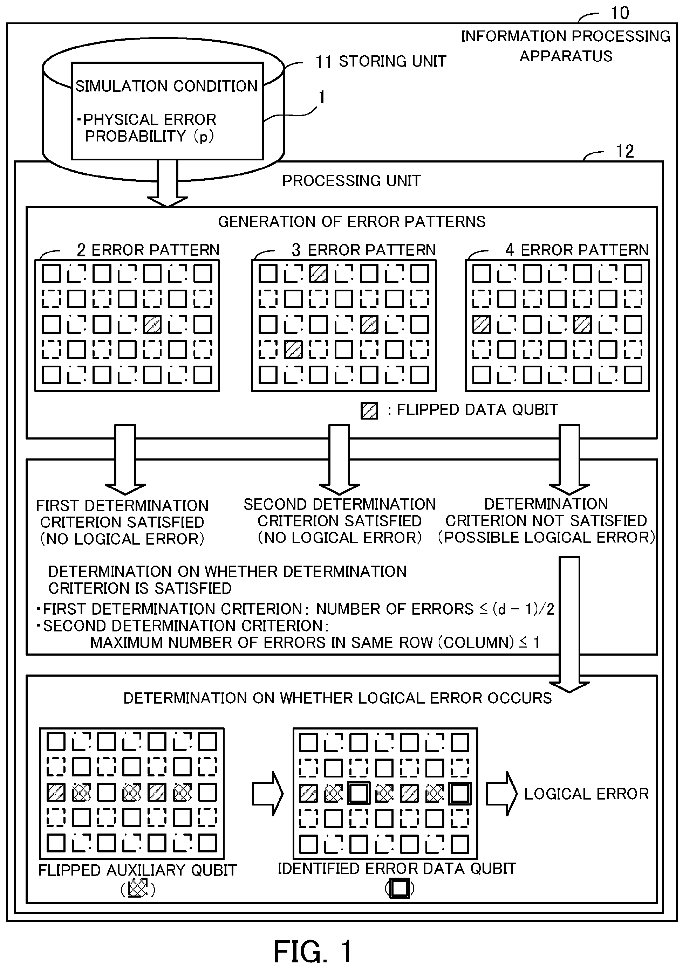

FIG. 1 illustrates an example of a simulation method according to the first embodiment. FIG. 1 depicts an information processing apparatus 10 for implementing the simulation method according to the first embodiment. The information processing apparatus 10 may execute, for example, a simulation program to thereby implement the simulation method according to the first embodiment.

The information processing apparatus 10 includes a storing unit 11 and a processing unit 12. The storing unit 11 is, for example, a memory or a storage device included in the information processing apparatus 10. The processing unit 12 is, for example, a processor or an arithmetic circuit included in the information processing apparatus 10.

The storing unit 11 stores a simulation condition 1. For example, the simulation condition 1 includes a physical error probability. The physical error probability is a probability that an error occurs on a data qubit.

The processing unit 12 performs a simulation of error correction on qubits based on the simulation condition 1. The processing unit 12 calculates the probability of a logical error occurrence in a predetermined qubit error correction scheme by the simulation.

For example, the processing unit 12 determines first data qubits to which errors are introduced among a plurality of data qubits included in a two-dimensional lattice, in which the plurality of data qubits and a plurality of ancilla qubits are alternately arranged in each of the row direction and the column direction. Then, the processing unit 12 generates error patterns 2 to 4 each indicating the first data qubits in the two-dimensional lattice.

For example, the processing unit 12 determines, for each of the data qubits, whether to introduce an error with the physical error probability indicated in the simulation condition 1 using a random number. Then, the processing unit 12 generates the error patterns 2 to 4 indicating the data qubits that are determined to have an error introduced.

For each of the generated error patterns 2 to 4, the processing unit 12 determines whether the first data qubits indicated in the error patterns 2 to 4 satisfy a predetermined determination criterion. As the predetermined determination criterion, for example, a first determination criterion may be applied that the number of first data qubits to which errors are introduced is equal to or less than a predetermined value according to the size of the two-dimensional lattice. The predetermined value according to the size of the two-dimensional lattice in the first determination criterion is, for example, 1/2 of a value obtained by subtracting 1 from a code distance of the two-dimensional lattice.

The code distance is a minimum value of the number of data qubits included in one side of the two-dimensional lattice. For example, in the error patterns 2 to 4, three data qubits are included in the side in the vertical direction, and four data qubits are included in the side in the horizontal direction. Therefore, the code distance of the error patterns 2 to 4 is "3". When the code distance is "3", 1/2 of the value obtained by subtracting 1 from the code distance is **"1".**

As the predetermined determination criterion, a second determination criterion may also be applied that a maximum value of the number of first data qubits included in the same row or the same column of the two-dimensional lattice is equal to or less than a predetermined value (for example, "1").

When an error pattern satisfies the applied determination criterion, the processing unit 12 determines that a logical error does not occur in the error pattern. For example, in the error pattern **2,** there is only one first data qubit to which an error is introduced. In this case, the first determination criterion is satisfied. Therefore, when the first determination criterion is applied as the determination criterion, it is determined that a logical error does not occur in the quantum error correction for the error pattern 2.

In the error pattern 3, there are three first data qubits to which errors are introduced. Therefore, the first determination criterion is not satisfied. On the other hand, each of the first data qubits included in the error pattern 3 is in a different row and column. Therefore, the maximum value of the number of first data qubits in the same row or column is "1", and the second determination criterion is thus satisfied. When the second determination criterion is applied as the determination criterion, it is determined that a logical error does not occur in the quantum error correction for the error pattern 3.

In the error pattern 4, there are two first data qubits to which errors are introduced. Therefore, the first determination criterion is not satisfied. The first data qubits included in the error pattern 4 are included in the same row. Therefore, the maximum value of the number of first data qubits in the same row or column is "2", and the second determination criterion is thus not satisfied. Even when both the first determination criterion and the second determination criterion are applied as the determination criteria, the error pattern 4 does not satisfy the determination criteria. In this case, it is determined that a logical error may occur in the quantum error correction for the error pattern 4.

When the determination criterion is not satisfied, the processing unit 12 determines whether a logical error occurs based on error detection information in which ancilla qubits adjacent, in the row direction or the column direction, to the first data qubits indicated in the corresponding error pattern have flipped states. For example, the processing unit 12 searches the error pattern for data qubits that could cause flips on the flipped ancilla qubits according to a predetermined quantum error correction scheme, and identifies data qubits on which errors have occurred. The processing unit 12 determines whether a logical error occurs based on the identified data qubits and the first data qubits. For example, when the identified data qubits and the first data qubits are consecutive from one side of the two-dimensional lattice to the other side, the processing unit 12 determines that a logical error occurs.

For example, when ancilla qubits are flipped based on the error pattern 4, if data qubits whose states are flipped as errors in the error pattern 4 are identified as error data qubits, a logical error does not occur. However, if other data qubits that could flip the ancilla qubits are identified as error data qubits based on the error pattern 4, a logical error may occur.

In this way, by determining whether a logical error occurs for the generated error patterns 2 to 4, it is possible to calculate the probability of a logical error occurrence in a predetermined quantum error correction scheme. In addition, when the error patterns 2 to 4 each satisfy a predetermined determination criterion, the process of identifying error locations based on the flipped ancilla qubits is skipped for the error pattern, which leads to a reduced number of executions of the process of identifying the error locations. As a result, the efficiency of calculating the probability of a logical error occurrence in a predetermined quantum error correction scheme is improved.

### Second Embodiment

Next, a second embodiment will be described. The second embodiment is directed to a computer that executes a simulation of error correction by a surface code (hereinafter referred to as a surface code simulation) for errors that randomly occur in a quantum computer and efficiently determines whether a logical error occurs.

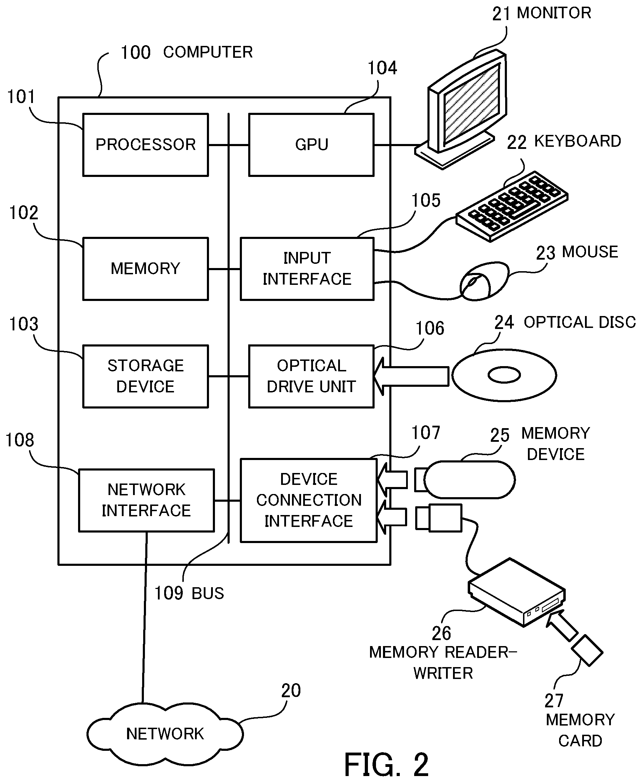

FIG. 2 illustrates an example of hardware of a computer that executes a surface code simulation. An illustrated computer 100 has a processor 101 to control its entire operation. A memory 102 and a plurality of peripheral devices are connected to the processor 101 via a bus 109. The processor 101 may be a multiprocessor. The processor 101 is, for example, a central processing unit (CPU), a micro processing unit (MPU), or a digital signal processor (DSP). At least a part of the functions realized by the processor 101 executing a program may be realized by an electronic circuit such as an application specific integrated circuit (ASIC) or a programmable logic device (PLD).

The memory 102 is used as a main storage device of the computer 100. The memory 102 temporarily stores at least part of an operating system (OS) program and application programs to be executed by the processor 101. The memory 102 also stores various data used for processing by the processor 101. As the memory 102, for example, a volatile semiconductor storage device such as a random access memory (RAM) is used.

The peripheral devices connected to the bus 109 include a storage device 103, a graphics processing unit (GPU) 104, an input interface 105, an optical drive unit 106, a device connection interface 107, and a network interface 108.

The storage device 103 electrically or magnetically writes and reads data to and from a built-in recording medium. The storage device 103 is used as an auxiliary storage device of the computer 100. The storage device 103 stores OS programs, application programs, and various data. As the storage device 103, for example, a hard disk drive (HDD) or a solid state drive (SSD) may be used.

The GPU 104 is an arithmetic unit that performs image processing, and is also called a graphic controller. A monitor 21 is connected to the GPU 104. The GPU 104 displays an image on the screen of the monitor 21 according to an instruction from the processor 101. Examples of the monitor 21 include a display device using organic electro luminescence (EL) and a liquid crystal display device.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive unit 106 reads data recorded on an optical disc 24 or writes data to the optical disc 24 using laser light or the like. The optical disc 24 is a portable recording medium on which data is recorded so as to be read by reflection of light. The optical disc 24 may be a digital versatile disc (DVD), a DVD-RAM, a compact disc read-only memory (CD-ROM), a CD-recordable (CD-R), a CD-rewritable (CD-RW), or the like.

The device connection interface 107 is a communication interface for connecting peripheral devices to the computer 100. For example, a memory device 25 and a memory reader-writer 26 may be connected to the device connection interface 107. The memory device 25 is a recording medium having a function of communicating with the device connection interface 107. The memory reader-writer 26 is a device that writes data to a memory card 27 or reads data from the memory card 27. The memory card 27 is a card-type recording medium.

The network interface 108 is connected to a network 20. The network interface 108 transmits and receives data to and from other computers or communication devices via the network 20. The network interface 108 is a wired communication interface connected to a wired communication device such as a switch or a router via a cable. Instead, the network interface 108 may be a wireless communication interface communicatively connected to a wireless communication device such as a base station or an access point by radio waves.

The computer 100 realizes the processing functions of the second embodiment by the hardware as described above. The information processing apparatus 10 described in the first embodiment may also be implemented by hardware similar to that of the computer 100 illustrated in FIG. 2.

The computer 100 realizes the processing functions of the second embodiment by executing a program recorded in a computer-readable recording medium, for example. The program describing processing contents to be executed by the computer 100 may be recorded in various recording media. For example, a program to be executed by the computer 100 may be stored in the storage device 103. The processor 101 loads at least a part of the program in the storage device 103 into the memory 102 and executes the program. The program to be executed by the computer 100 may be recorded in a portable recording medium such as the optical disc 24, the memory device 25, or the memory card 27. The program stored in the portable recording medium becomes executable after being installed in the storage device 103 under the control of the processor 101, for example. Alternatively, the processor 101 may read the program directly from the portable recording medium and execute the program.

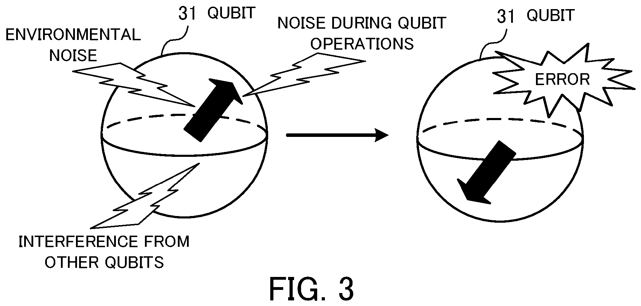

Before describing the surface code simulation, error correction by a surface code in a quantum computer and causes of a logical error will be described below with reference to FIGS. 3 to 9.

FIG. 3 illustrates an example of an error occurrence situation in a qubit. A qubit 31 is affected by various noises. The types of noises include environmental noise, noise during qubit operations, and interference from other qubits. There is a possibility that the state of the qubit 31 is unintentionally changed due to the influence of a noise. Such an unintended change in the state is a qubit error. Errors occurring on qubits include bit-flip errors (X errors) and phase-flip errors (Z errors).

Current quantum computers have a high probability of error occurrences on qubits due to environmental noise or the like, and it is difficult to accurately execute large-scale computation as they are. Therefore, in order to put quantum computers into practical use, it is needed to be able to execute computation while fixing errors (quantum error correction). Quantum error correction is a process of, for example, making qubits redundant and detecting and correcting errors to maintain a correct state.

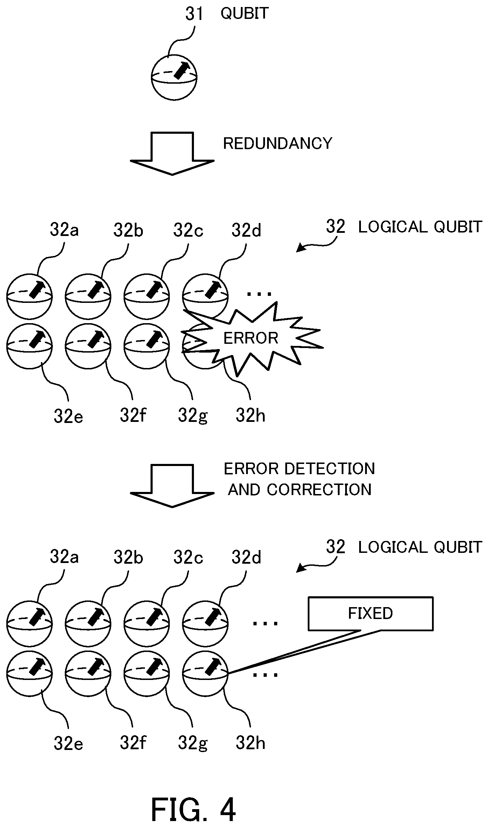

FIG. 4 illustrates an example of qubit redundancy. When one qubit 31 is made redundant, a quantum state represented by the qubit 31 is represented by a logical quantum state by a logical qubit 32. The logical qubit 32 includes a plurality of qubits 32a to 32h and so on.

Here, it is assumed that an error occurs in one qubit 32h constituting the logical qubit 32. In this case, an error qubit and error details are identified by a process of identifying the error qubit and the error details.

When the qubit 32h is correctly identified as an error qubit and the error details are also correctly identified, a gate operation of error correction is performed on the qubit 32h. By the error correction, the state of the logical qubit 32 is corrected to a state when no error occurs.

In the example of FIG. 4, it is assumed that the error qubit is correctly identified; however, the identification of the error qubit is not easy. Information relating to the states of the qubits 32a to 32h and so on constituting the logical qubit 32 is used to identify the error qubit. However, if the qubit is directly measured, the quantum state is destroyed and the calculation fails to continue. Therefore, ancilla qubits are introduced, and information on the states of the qubits 32a to 32h and so on constituting the logical qubit 32 is acquired by measuring the states of the ancilla qubits.

The surface code is known as a method of identifying error qubits based on the states of qubits obtained using ancilla qubits. The surface code is a typical coding (redundancy) method in quantum error correction.

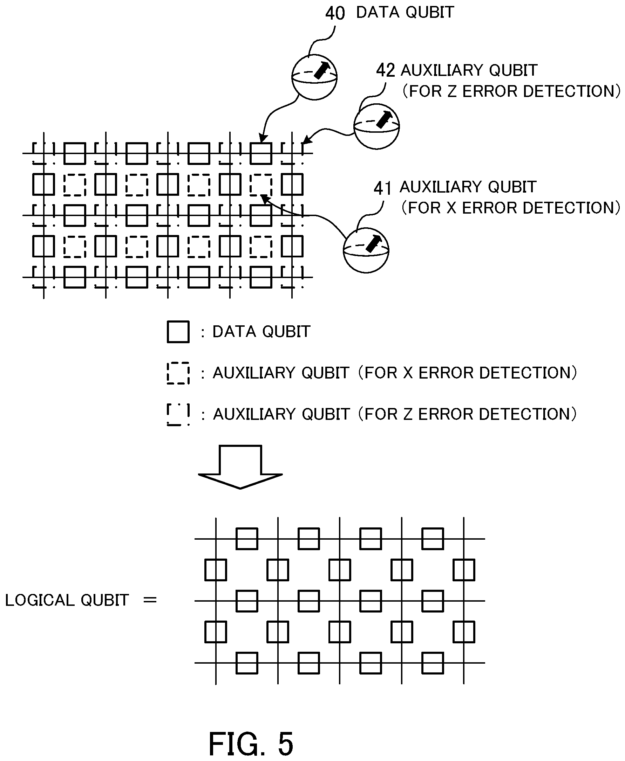

FIG. 5 illustrates an example of a configuration of qubits for performing a surface code. In the example of FIG. 5, qubits are arranged in a two-dimensional lattice. Data qubits 40 and ancilla qubits 41 and 42 are alternately arranged in the row direction and the column direction. The ancilla qubits 41 and 42 are divided into the ancilla qubits 41 for X error detection and the ancilla qubits 42 for Z error detection. The ancilla qubits 41 for X error detection and the ancilla qubits 42 for Z error detection are alternately arranged for each column.

One logical qubit is configured using all of the data qubits 40. The state of a logical qubit is referred to as a logical quantum state. The number of data qubits on the shorter side of the two-dimensional lattice of qubits constituting a logical qubit is called a code distance.

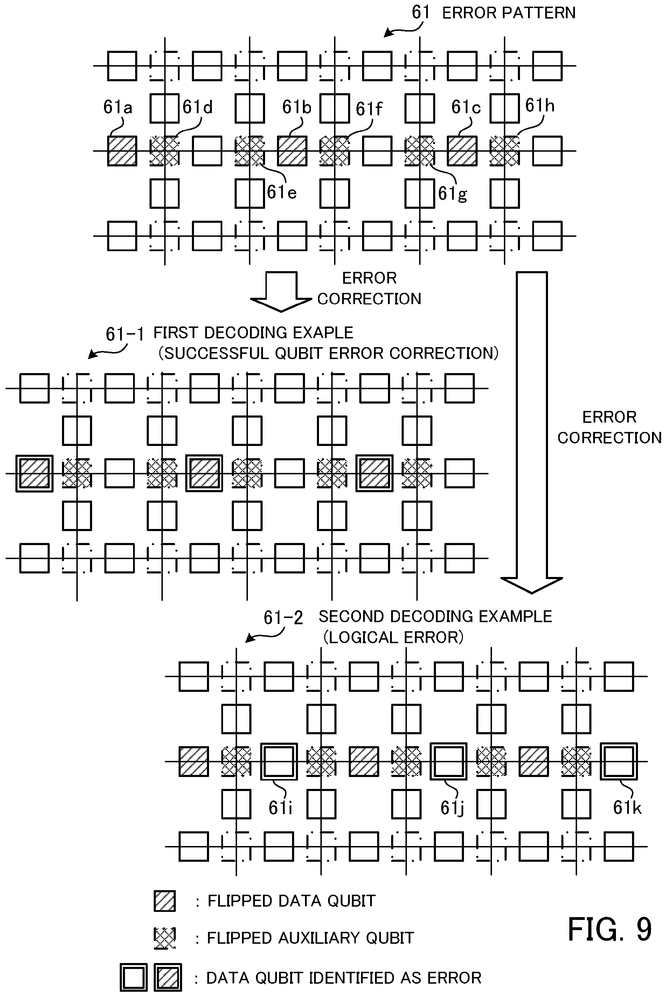

Note that the qubits illustrated in FIG. 5 are a part of qubits used for error correction by a surface code. In the case of performing the error correction by the surface code, the quantum number (the sum of the data qubits and the ancilla qubits) of one side of the two-dimensional lattice including all the qubits used for the error correction is an odd number, and the data qubits are arranged at four corners (see FIG. 9 and the like).

First, the logical quantum state is appropriately initialized. Then, at the time of error detection, a gate operation (two-qubit operation) is performed between one ancilla qubit and four surrounding data qubits, and the ancilla qubit is measured to thereby detect the presence or absence of an error. The error detection is divided into X error detection using the ancilla qubits 41 for X error detection and Z error detection using the ancilla qubits 42 for Z error detection.

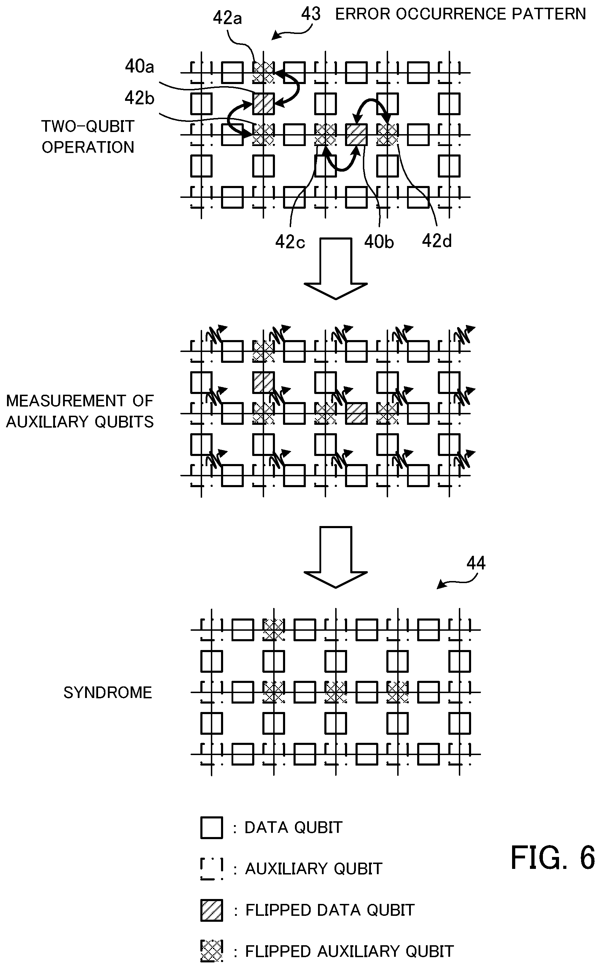

FIG. 6 illustrates an example of measurement results of ancilla qubits when errors have occurred. In an error occurrence pattern 43 illustrated in FIG. 6, Z errors occur on two data qubits 40a and 40b. Z errors are detected by ancilla qubits for Z error detection. Note that FIG. 6 omits the ancilla qubits for X error detection.

In the quantum error correction using the surface code, first, a predetermined two-qubit operation is performed between each data qubit and an ancilla qubit adjacent to the data qubit. Specifically, a two-qubit operation for Z error detection is performed between a data qubit and an ancilla qubit for Z error detection, and a two-qubit operation for X error detection is performed between a data qubit and an ancilla qubit for X error detection.

In the example of FIG. 6, by the two-qubit operations, the states of ancilla qubits 42a to 42d for Z error detection adjacent to the data qubits 40a and 40b with Z errors are flipped. The flips of the ancilla qubits 42a to 42d are detected by measuring the states of all the ancilla qubits after the two-qubit operations. Data indicating the measurement results of the ancilla qubits is referred to as a syndrome 44. The syndrome 44 is an example of the error detection information described in the first embodiment.

In the error correction processing, the locations of data qubits with errors are identified based on the syndrome 44.

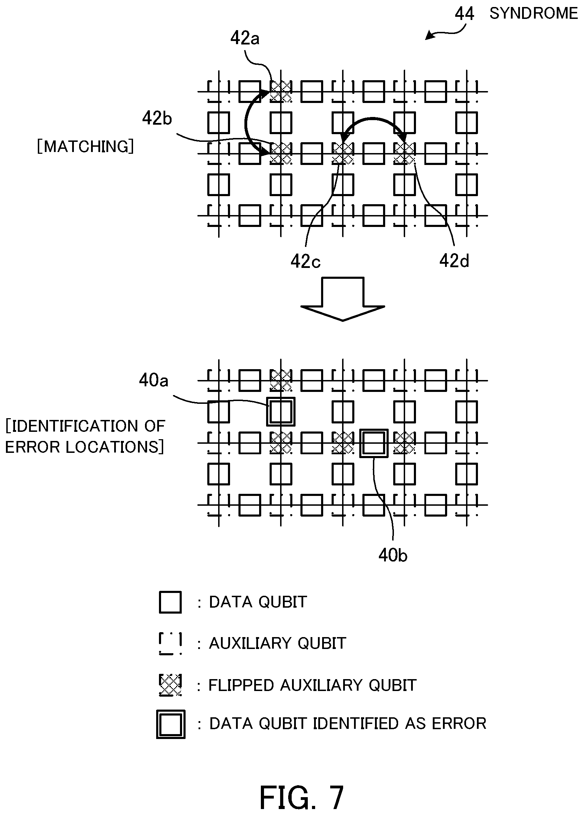

FIG. 7 illustrates an example of error correction by a surface code. In the case of performing error correction by a surface code, first, matching of the flipped ancilla qubits is performed based on the syndrome 44. In the matching, pairs of the flipped ancilla qubits 42a to 42d are generated. In the example of FIG. 7, a pair of the ancilla qubits 42a and 42b and a pair of the ancilla qubits 42c and 42d are generated.

Then, error locations are identified based on the pairs of ancilla qubits generated by the matching. That is, for each pair of flipped ancilla qubits, one or more data qubits are identified that would simultaneously flip the pair when errors have occurred on the data qubits. In the example of FIG. 7, the data qubit 40a is identified as an error location based on the pair of the ancilla qubits 42a and 42b. The data qubit 40b is identified as an error location based on the pair of the ancilla qubit 42c and the ancilla qubit 42d.

In this way, the data qubits of the error locations are identified based on the syndrome 44. This process of identifying data qubits with errors is called decoding.

The surface code has a property of being unable to uniquely identify error locations. For example, different error locations are identified for each matching candidate of flipped ancilla qubits. Therefore, in the decoding, for example, a solution having the smallest number of error locations (candidates for error locations) are identified as error locations.

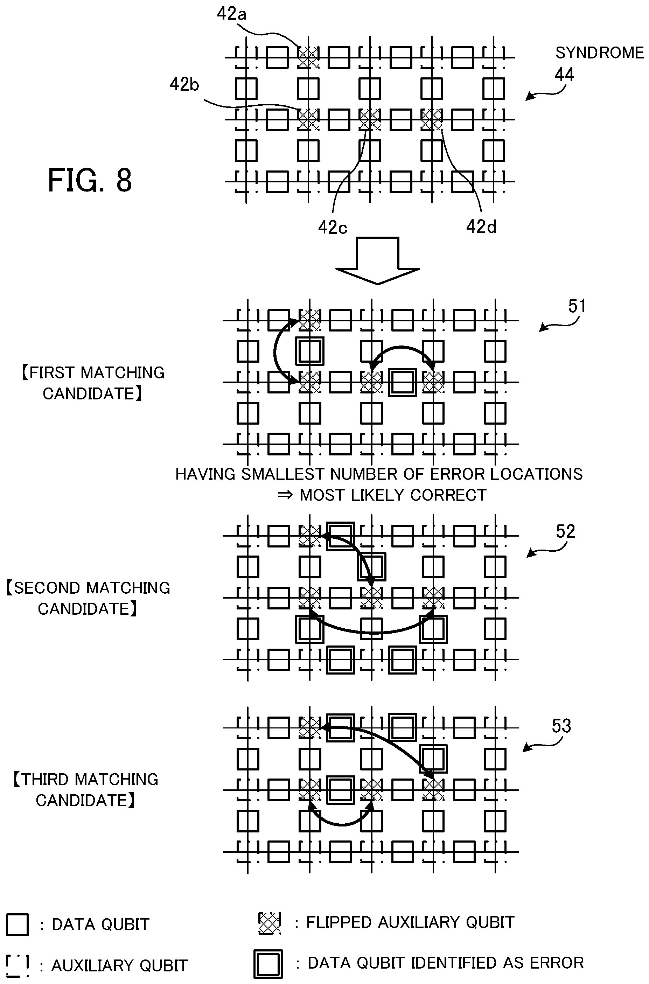

FIG. 8 illustrates an example of being unable to identify error locations. In the syndrome 44, the states of the four ancilla qubits 42a to 42d are flipped. Thus, matching of the flipped four ancilla qubits 42a to 42d is performed.

A first matching candidate 51 generates a pair of the ancilla qubits 42a and 42b and a pair of the ancilla qubits 42c and 42d. When error locations are identified based on these pairs, for example, two data qubits are identified as the error locations.

A second matching candidate 52 generates a pair of the ancilla qubits 42a and 42c and a pair of the ancilla qubits 42b and 42d. When error locations are identified based on these pairs, for example, six data qubits are identified as the error locations.

A third matching candidate 53 generates a pair of the ancilla qubits 42a and 42d and a pair of the ancilla qubits 42b and 42c. When error locations are identified based on these pairs, for example, four data qubits are identified as the error locations.

In the above example, the number of error locations identified based on the first matching candidate 51 is the smallest. That is, it is determined that the error locations identified based on the first matching candidate 51 are most likely to indicate correct error locations.

In this way, the error locations are identified so as to minimize the number of error locations. Quantum error correction is performed by flipping the states of the data qubits at the identified error locations.

However, the error locations identified in the decoding are only highly likely to be error locations, and there is no guarantee that errors have actually occurred at the identified error locations. Therefore, in the quantum error correction, an error correction process (state flipping) may be carried out on erroneous data qubits.

FIG. 9 illustrates an example of a logical error due to erroneous correction. In an error pattern 61 illustrated in FIG. 9, Z errors occur on a plurality of data qubits 61a to 61c on the same row. In this case, the states of ancilla qubits 61d to 61h adjacent to one of the data qubits 61a to 61c on the same row are flipped.

When a syndrome with the states of the ancilla qubits 61d to 61h flipped is obtained, the decoding depicted in a first decoding example 61-1 and the decoding depicted in a second decoding example 61-2 are possible.

In the first decoding example 61-1, the data qubits 61a to 61c with errors are correctly identified. When the quantum error correction is performed on the data qubits 61a to 61c identified in the first decoding example 61-1, the quantum error correction is successful.

On the other hand, in the second decoding example 61-2, data qubits 61i to 61k different from the data qubits 61a to 61c with errors are identified. When the error correction process is performed on the data qubits 61i to 61k identified in the second decoding example 61-2, the data qubits 61a to 61c and 61i to 61k are consequently flipped from the correct states. That is, in the second decoding example 61-2, the error-uncorrected data qubits 61a to 61c and the erroneously corrected data qubits 61i to 61k are connected from one boundary to the other boundary of the two-dimensional lattice representing one logical qubit. This state is called a logical error.

A logical error changes the logical quantum state. Therefore, even if the computation is continued, correct results are not obtained. That is, when a logical error occurs, the quantum error correction fails. Therefore, when evaluating the performance of the quantum error correction, it is important to correctly evaluate logical errors. For example, when a new method of quantum error correction or a new decoding method is developed, the logical error probability is used as a performance evaluation value of the quantum error correction.

The logical error probability may be obtained by a computer simulation. That is, with an actual quantum computer, it is not possible to determine whether a logical error has occurred unless the data qubits themselves are measured, nor is it possible to grasp the frequency of a logical error occurrence. However, with simulation of error correction by the surface code using a classical computer, error locations are known in advance, and thus it is possible to determine whether a logical error occurs.

The logical error probability depends on the code distance, the error occurrence frequency (physical error probability) of data qubits, and the like.

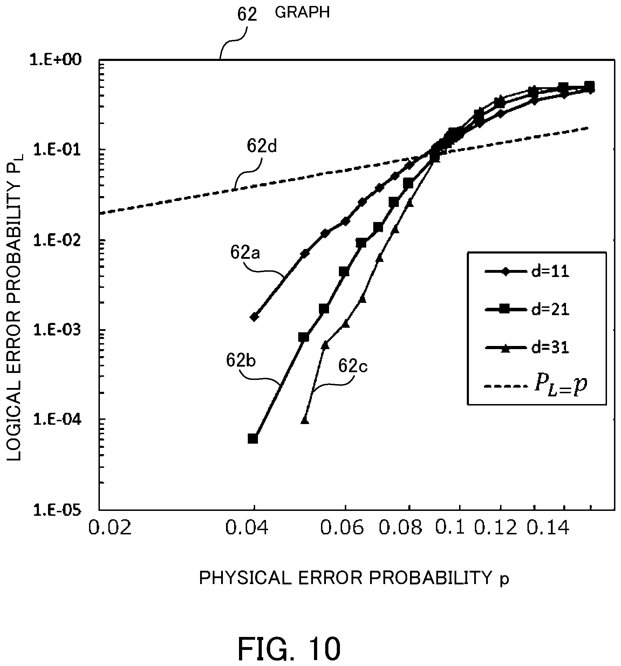

FIG. 10 illustrates an example of a relationship between a physical error probability and a logical error probability. In a computer simulation of the quantum error correction, physical errors are generated at a physical error probability to calculate a logical error probability at that time.

For example, in a computer simulation, N error patterns (N is a natural number) are generated, and the error patterns are individually decoded to thereby find a number m (m is an integer of 0 or more) of logical error occurrences (hereinafter, the logical error occurrence number m). In this case, a logical error probability P_{L} is obtained by "P_{L} = m/N".

In a graph 62, the horizontal axis represents a physical error probability p, and the vertical axis represents the logical error probability P_{L}. The graph 62 depicts polygonal lines 62a, 62b, and 62c, each indicating the logical error probability according to the physical error probability for a code distance. The polygonal line 62a indicates the logical error probability according to the physical error probability for logical qubits with a code distance d of "11". The polygonal line 62b indicates the logical error probability according to the physical error probability for logical qubits with the code distance d of "21". The polygonal line 62c indicates the logical error probability according to the physical error probability for logical qubits with the code distance d of "31".

A broken line 62d in the graph 62 indicates points where the physical error probability and the logical error probability are equal to each other. The farther the logical error probability is below the broken line 62d, the higher the performance of the quantum error correction.

In a particular scheme of quantum error correction, the higher the physical error probability, the higher the logical error probability. The larger the code distance, the higher the performance of quantum error correction. A different quantum error correction scheme has a different polygonal line indicating the logical error probability according to the physical error probability. Therefore, the logical error probability according to the physical error probability is calculated for each scheme of the quantum error correction by a computer simulation, and the performance of the quantum error correction is evaluated. In order to accurately evaluate the performance, a sufficiently large number of error patterns needs to be generated. For example, the number N of error patterns (hereinafter, also referred to as the error pattern generation number N) used to evaluate the performance of quantum error correction by a computer simulation is generally 10,000 to 1,000,000.

In the calculation of the logical error probability by a computer simulation, computation of decoding is performed for each physical error occurrence pattern, and a large number of decoding processes are performed. In particular, when the physical error probability is small and the code distance is large, since a logical error is a rare event, the number of samples of error patterns for accurate performance evaluation becomes enormous, and the time needed for calculating the logical error probability becomes very long.

Therefore, a technique for reducing the amount of calculation is needed. In the calculation of the logical error probability of quantum error correction, the computation of decoding occupies a large proportion. In the decoding, all matching candidates as illustrated in FIG. 8 are searched based on a syndrome corresponding to the error pattern, and error locations in each matching candidate are searched. In the search, as the code distance increases, the search space also increases, which in turn increases the amount of computation.

Therefore, among the generated error patterns, the computer 100 skips decoding of error patterns that are assumed not to cause logical errors. For example, when the number of physical error occurrences is very small relative to the code distance, almost no logical error occurs.

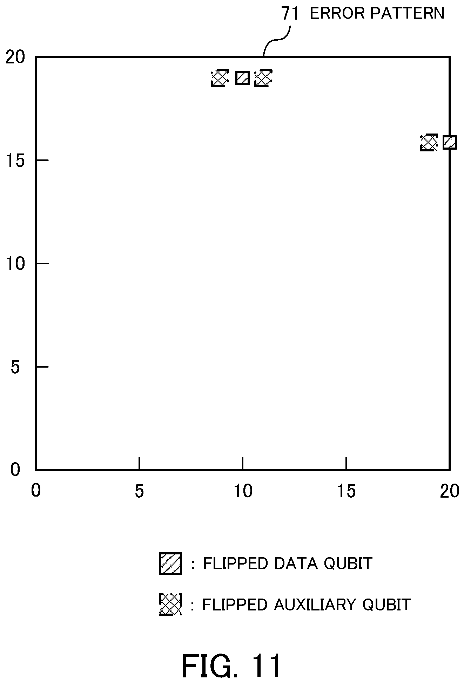

FIG. 11 illustrates an example of an error pattern. An error pattern 71 indicates, in a two-dimensional array of physical qubits constituting a logical qubit with a code distance of 11 (d = 11), locations of physical qubits flipped by Z errors. In the error pattern 71, the number of flipped data qubits is two. That is, the number of errors is "2". The states of ancilla qubits adjacent to the flipped data qubits are also flipped. In the case of the error pattern 71, the probability of a logical error occurrence by decoding is very low.

When it is estimated that no logical error would occur as in the case of the error pattern 71, the computer 100 skips decoding, thereby improving the calculation efficiency of the logical error probability. Specifically, the computer 100 defines a determination criterion for skipping decoding, recognizes that an error pattern satisfying the determination criterion has a remarkably low degree of a logical error occurrence, and thus skips the computation of decoding for the error pattern.

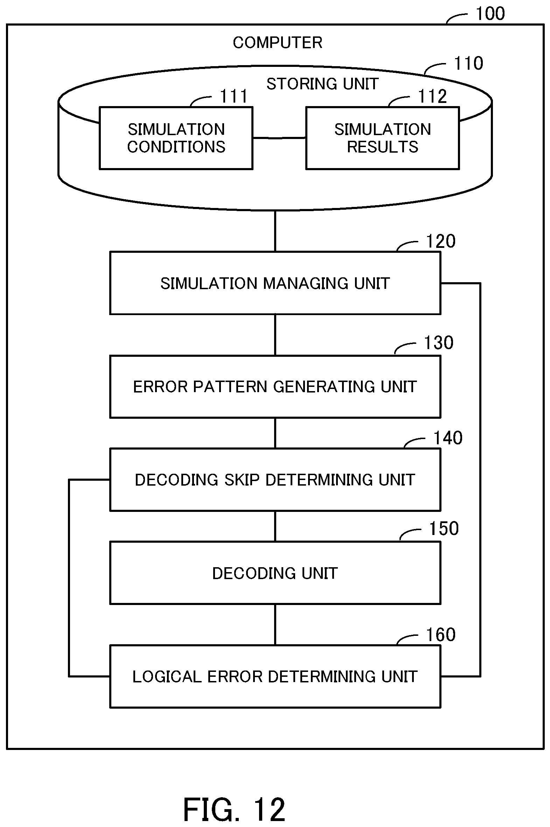

FIG. 12 is a block diagram illustrating functions of a computer for performing a surface code simulation. The computer 100 includes a storing unit 110, a simulation managing unit 120, an error pattern generating unit 130, a decoding skip determining unit 140, a decoding unit 150, and a logical error determining unit 160.

The storing unit 110 stores simulation conditions 111 and simulation results 112. The simulation conditions 111 are conditions such as the number of error patterns to be generated, a code distance, and a physical error probability. When a quantum error correction scheme (program) has been prepared, the simulation conditions 111 include designation of the scheme to be applied. The simulation results 112 are information indicating results of simulation of quantum error correction. For example, the simulation results 112 include logical error probabilities each obtained when quantum error correction is performed under the corresponding conditions, in association with information such as a quantum error correction scheme, a code distance, and a physical error probability.

The simulation managing unit 120 manages a simulation of quantum error correction using a surface code. For example, the simulation managing unit 120 instructs the error pattern generating unit 130 to generate error patterns according to the simulation conditions 111. The simulation managing unit 120 acquires logical error determination results for each error pattern from the logical error determining unit 160 and calculates the logical error probability. Then, the simulation managing unit 120 stores the calculated logical error probability in the storing unit 110 as the simulation results 112.

The error pattern generating unit 130 generates an error pattern by introducing errors to data qubits with the code distance indicated in the simulation conditions at the physical error probability indicated in the simulation conditions. The error pattern generating unit 130 transmits the generated error pattern to the decoding skip determining unit 140.

The decoding skip determining unit 140 determines whether to skip decoding of the error pattern generated by the error pattern generating unit 130. For example, the decoding skip determining unit 140 compares the error pattern with a predetermined determination criterion, and determines to skip decoding if the determination criterion is satisfied. When determining to skip decoding, the decoding skip determining unit 140 notifies the logical error determining unit 160 of the omission of decoding. If determining not to skip decoding, the decoding skip determining unit 140 instructs the decoding unit 150 to perform decoding.

In response to the decoding instruction, the decoding unit 150 performs decoding based on a syndrome corresponding to the generated error pattern. The decoding includes, for example, generation of the syndrome, matching of ancilla qubits having flipped states, generation of solutions indicating error locations according to the matching results, and identification of the most likely solution. The finally identified solution is decoding results indicating data qubits estimated as error locations.

The logical error determining unit 160 determines whether a logical error occurs based on the error pattern and the decoding results. The logical error determining unit 160 notifies the simulation managing unit 120 of the determination results of the presence or absence of a logical error occurrence.

The function of each component illustrated in FIG. 12 may be realized by, for example, causing a computer to execute a program module corresponding to the component.

In this way, the decoding skip determining unit 140 determines whether to skip decoding, and decoding is carried out only when the decoding skip determining unit 140 determines not to skip the decoding. This makes it possible to efficiently calculate the quantum error probability. Each of the following criteria may be considered as a determination criterion for skipping decoding, for example.
- First determination criterion: the number of errors n₁ is (d - 1)/2 or less, i.e., n₁ ≤ (d - 1)/2.
- Second determination criterion: a maximum number of errors n₂ in the same row or the same column of the lattice is 1 or less, i.e., n₂ ≤ 1.

The first determination criterion is based on the fact that there are more than (d - 1)/2 physical errors to cause a logical error due to erroneous decoding. In the example illustrated in FIG. 9, the number of data qubits in the row direction is "6". Assuming that the number of data qubits in the column direction is also "6", the code distance d is "6". As in the second decoding example 61-2 depicted in FIG. 9, a logical error occurs when data qubits that remain flipped even after quantum error correction (uncorrected data qubits and erroneously corrected data qubits) continue from one side to the other side. Therefore, in order to cause a logical error, at least six data qubits are needed that remain flipped even after quantum error correction. When the number of data qubits flipped by errors is "2.5" (= (6 - 1)/2) or less, the possibility that four or more data qubits are identified as errors by decoding is remarkably low. Therefore, when the first determination criterion is satisfied, the possibility of a logical error is determined to be low.

The second determination criterion is based on the fact that even if the number of errors n₁ exceeds (d - 1)/2, the possibility of a logical error is low if the error locations are dispersed. That is, if the number of data qubits with errors is one or less in each row or each column of the two-dimensional lattice, there is a very low possibility that data qubits that remain flipped even after quantum error correction are consecutive enough to cause a logical error.

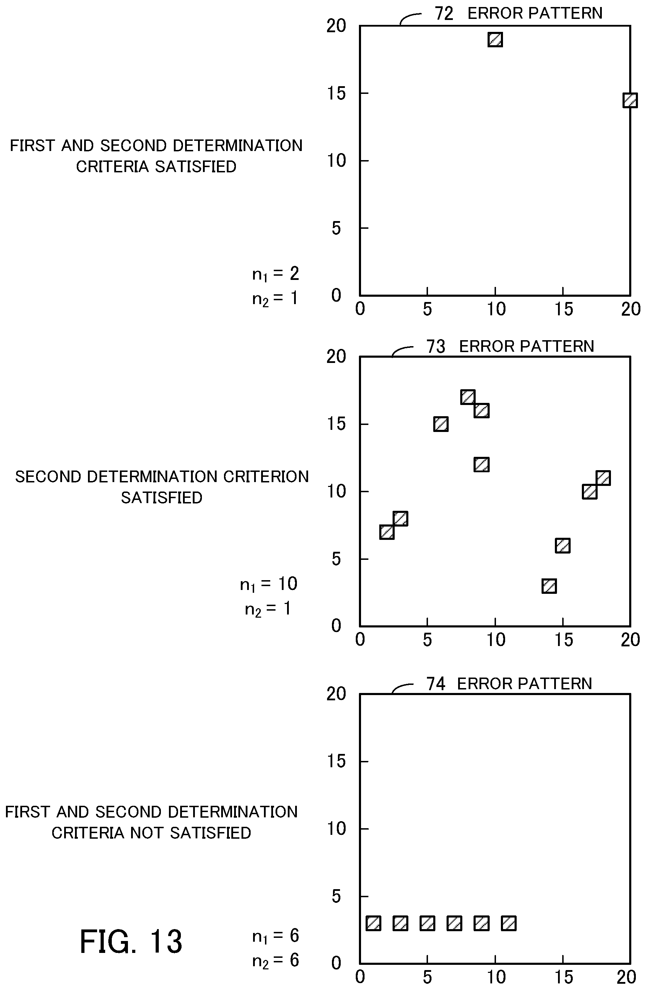

FIG. 13 illustrates an example of determining whether to skip decoding. In the example of FIG. 13, the code distance d is "11". In this case, "(d - 1)/2" of the first determination criterion is "5".

The number of errors n₁ of an error pattern 72 is "2". Since the number of errors n₁ is equal to or less than "(d - 1)/2", the error pattern 72 satisfies the first determination criterion. The maximum number of errors n₂ in the same row or the same column of the data qubits with errors in the error pattern 72 is "1". Therefore, the error pattern 72 also satisfies the second determination criterion. Since the error pattern 72 satisfies both the first determination criterion and the second determination criterion, the decoding process for the error pattern 72 is skipped.

The number of errors n₁ of an error pattern 73 is "10". Since the number of errors n₁ is larger than "(d - 1)/2", the error pattern 73 does not satisfy the first determination criterion. The maximum number of errors n₂ in the same row or the same column of the data qubits with errors in the error pattern 73 is "1". Therefore, the error pattern 73 satisfies the second determination criterion. Since the error pattern 73 does not satisfy the first determination criterion but satisfies the second determination criterion, the decoding process for the error pattern 73 is skipped.

The number of errors n₁ of an error pattern 74 is "6". Since the number of errors n₁ is larger than " (d - 1)/2", the error pattern 74 does not satisfy the first determination criterion. In addition, the maximum number n₂ of errors in the same row or the same column of the data qubits with errors in the error pattern 74 is "6". Therefore, the error pattern 74 does not satisfy the second determination criterion. Since the error pattern 74 satisfies neither the first determination criterion nor the second determination criterion, the decoding process for the error pattern 74 is performed.

Next, a procedure of a process of calculating the logical error probability of Z errors is described.

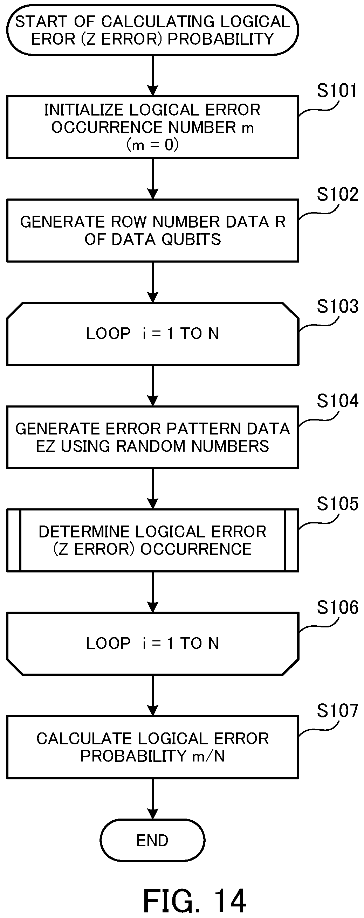

FIG. 14 is a flowchart illustrating an example of a procedure of a logical error (Z error) probability calculating process. Hereinafter, the process illustrated in FIG. 14 is described in order of step numbers.

[Step S101] Upon receiving an instruction to calculate a quantum error probability for a predetermined quantum error correction scheme, the simulation managing unit 120 initializes the logical error occurrence number m to "0" (m = 0).

[Step S102] The simulation managing unit 120 creates row number data R of data qubits. The row number data R is an array of size Nd. The size Nd is the number of data qubits. For example, the row number of the location of the k-th data qubit (k is an integer of 1 to Nd) is set as the value of the array of a subscript k of the row number data R.

[Step S103] The error pattern generating unit 130 repeats steps S104 and S105 until a variable i indicating the number of loops starting from 1 reaches N. N is an integer indicating the number of generated error patterns.

[Step S104] The error pattern generating unit 130 generates error pattern data EZ of Z errors of data qubits using random numbers. The error pattern data EZ is an array of the size Nd. When a Z error is introduced onto the k-th data qubit, the value of the array of the subscript k is set to "1". When an error is not introduced onto the k-th data qubit (k is an integer of 1 to Nd), the value of the array of the subscript k is set to "0".

For example, the error pattern generating unit 130 generates a random number (a real number of 0 to 1) for each data qubit. When the physical error probability is "a" (a is a real number of 0 to 1), if the generated random number is equal to or less than a, the error pattern generating unit 130 determines to introduce an error onto the corresponding data qubit.

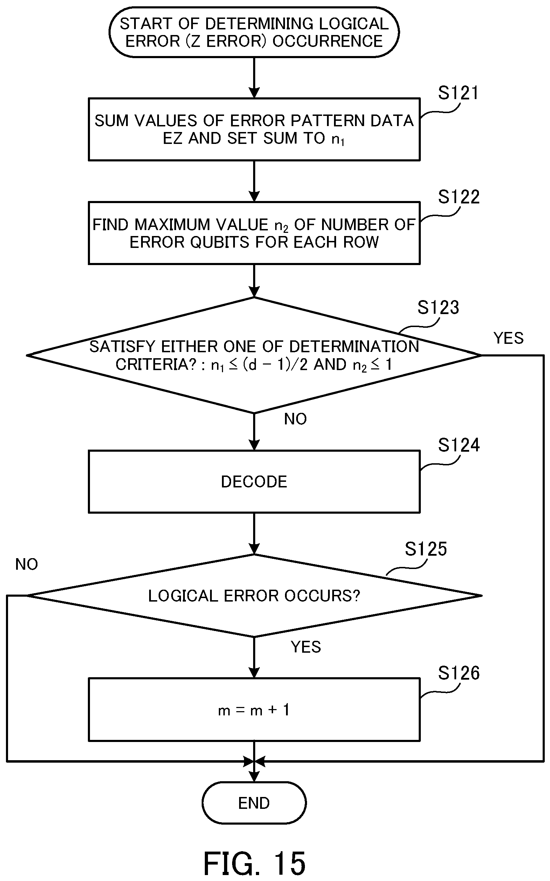

[Step S105] The decoding skip determining unit 140, the decoding unit 150, and the logical error determining unit 160 cooperate with each other to execute a logical error occurrence determining process. When a logical error occurs in the error pattern indicated by the generated error pattern data EZ by the logical error occurrence determining process, the logical error occurrence number m is counted up. Details of the logical error occurrence determining process are described later (see FIG. 15).

[Step S106] When the loop variable i reaches N, the error pattern generating unit 130 advances the process to step S107.

[Step S107] The simulation managing unit 120 calculates a logical error probability. The logical error probability is obtained by dividing the logical error occurrence number m by the error pattern generation number N.

In this way, the logical error probability is calculated. Next, the logical error occurrence determining process is described in detail.

FIG. 15 is a flowchart illustrating details of a procedure of a logical error (Z error) occurrence determining process. Hereinafter, the process illustrated in FIG. 15 is described in order of step numbers.

[Step S121] The decoding skip determining unit 140 sums the values of the error pattern data EZ. The decoding skip determining unit 140 sets the sum as n₁.

[Step S122] The decoding skip determining unit 140 sums the values of the error pattern data EZ for each row using the row number data R. For example, the decoding skip determining unit 140 counts the number of data qubits for which a value "1" indicating an error is set in the error pattern data EZ among data qubits for which the same row number is set in the row number data R. The decoding skip determining unit 140 sets the maximum value of the number of data qubits counted for each row as n₂.

[Step S123] The decoding skip determining unit 140 determines whether either the first determination criterion or the second determination criterion is satisfied. For example, if "n₁ ≤ (d - 1)/2", the decoding skip determining unit 140 determines that the first determination criterion is satisfied. If "n₂ ≤ 1", the decoding skip determining unit 140 determines that the second determination criterion is satisfied. When at least one of the determination criteria is satisfied, the decoding skip determining unit 140 determines that no logical error occurs, and ends the logical error occurrence determining process. If neither of the determination criteria is satisfied, the decoding skip determining unit 140 advances the process to step S124.

[Step S124] The decoding unit 150 decodes the generated error pattern. For example, the decoding unit 150 flips the states of ancilla qubits adjacent to data qubits with Z errors based on the error pattern data EZ. Next, the decoding unit 150 refers to an arrangement of the flipped ancilla qubits (syndrome) to identify data qubits identified as errors according to a predetermined quantum error correction scheme.

[Step S125] The logical error determining unit 160 determines whether a logical error occurs. For example, the logical error determining unit 160 identifies data qubits whose states are flipped from correct ones when error correction (flips of the states) is performed on data qubits identified as errors. The data qubits that are flipped from the correct states are those that have errors without being corrected, and those incorrectly corrected as if errors had occurred. The logical error determining unit 160 determines that a logical error occurs when data qubits in the states flipped from correct ones are consecutive from one side to the other side of the two-dimensional array of qubits constituting the logical qubit.

When a logical error occurs, the logical error determining unit 160 advances the process to step S126. When no logical error occurs, the logical error determining unit 160 ends the logical error occurrence determining process.

[Step S126] The logical error determining unit 160 adds "1" to the logical error occurrence number m.

In this way, the logical error probability for Z errors is calculated. Similarly, the logical error probability for X errors is calculated.

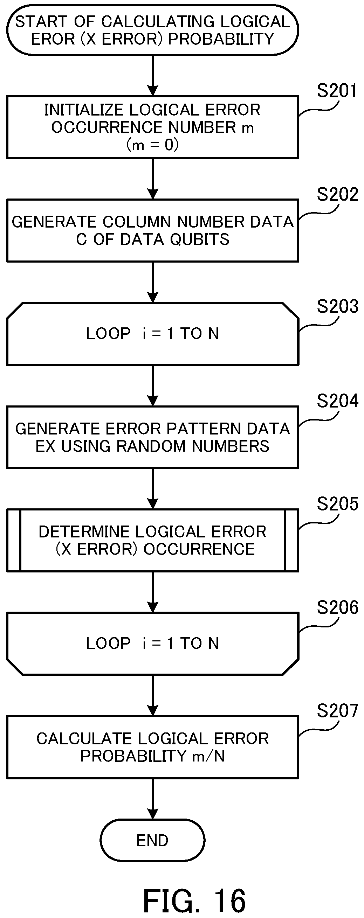

FIG. 16 is a flowchart illustrating an example of a procedure of a logical error (X error) probability calculating process. Hereinafter, the process illustrated in FIG. 16 is described in order of step numbers.

[Step S201] Upon receiving an instruction to calculate a quantum error probability for a predetermined quantum error correction scheme, the simulation managing unit 120 initializes the number of logical error occurrences m to "0" (m = 0).

[Step S202] The simulation managing unit 120 creates column number data C of data qubits. The column number data C is an array of size Nd. For example, the column number of the location of the k-th data qubit (k is an integer of 1 to Nd) is set as the value of the array of the subscript k of the column number data C.

[Step S203] The error pattern generating unit 130 repeats steps S204 and S205 until the variable i indicating the number of loops starting from 1 reaches N.

[Step S204] The error pattern generating unit 130 generates error pattern data EX of X errors of data qubits using random numbers. The error pattern data EX is an array of the size Nd. When an X error is introduced onto the k-th data qubit, the value of the array of the subscript k is set to "1".

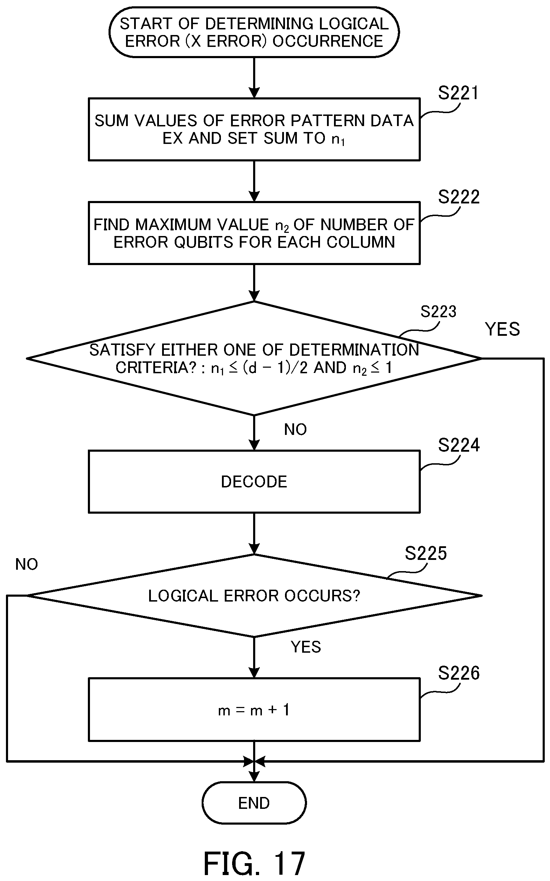

[Step S205] The decoding skip determining unit 140, the decoding unit 150, and the logical error determining unit 160 cooperate with each other to execute a logical error occurrence determining process. When a logical error occurs in the error pattern indicated by the generated error pattern data EX by the logical error occurrence determining process, the logical error occurrence number m is counted up. Details of the logical error occurrence determining process are described later (see FIG. 17).

[Step S206] When the loop variable i reaches N, the error pattern generating unit 130 advances the process to step S207.

[Step S207] The simulation managing unit 120 calculates a logical error probability. The logical error probability is obtained by dividing the logical error occurrence number m by the error pattern generation number N.

In this way, the logical error probability is calculated. Next, the logical error occurrence determining process for X errors is described in detail.

FIG. 17 is a flowchart illustrating details of a procedure of a logical error (X error) occurrence determining process. Hereinafter, the process illustrated in FIG. 17 is described in order of step numbers.

[Step S221] The decoding skip determining unit 140 sums the values of the error pattern data EX. The decoding skip determining unit 140 sets the sum as n₁.

[Step S222] The decoding skip determining unit 140 sums the values of the error pattern data EX for each column using the column number data C. For example, the decoding skip determining unit 140 counts the number of data qubits for which a value "1" indicating an error is set in the error pattern data EX among data qubits for which the same column number is set in the column number data C. The decoding skip determining unit 140 sets the maximum value of the number of data qubits counted for each column as n₂.

[Step S223] The decoding skip determining unit 140 determines whether either the first determination criterion or the second determination criterion is satisfied. When at least one of the determination criteria is satisfied, the decoding skip determining unit 140 determines that no logical error occurs, and ends the logical error occurrence determining process. If neither of the determination criteria is satisfied, the decoding skip determining unit 140 advances the process to step S224.

[Step S224] The decoding unit 150 decodes the generated error pattern. For example, the decoding unit 150 flips the states of ancilla qubits adjacent to data qubits with X errors based on the error pattern data EX. Next, the decoding unit 150 refers to an arrangement of the flipped ancilla qubits (syndrome) to identify data qubits identified as errors according to a predetermined quantum error correction scheme.

[Step S225] The logical error determining unit 160 determines whether a logical error occurs. When a logical error occurs, the logical error determining unit 160 advances the process to step S226. When no logical error occurs, the logical error determining unit 160 ends the logical error occurrence determining process.

[Step S226] The logical error determining unit 160 adds "1" to the logical error occurrence number m.

In this way, the quantum error probability is also calculated for X errors. Since the quantum error probabilities of Z errors and X errors are calculated, the accuracy of a quantum error correction scheme applied to decoding is quantitatively evaluated. In addition, since decoding is omitted for error patterns having a low possibility of causing a quantum error, the logical error probabilities are efficiently calculated.

Hereinafter, differences in calculation time between the quantum error probability calculation scheme (partially skipping decoding scheme), in which decoding is skipped based on the first determination criterion and the second determination criterion, and other quantum error probability calculation schemes are specifically described.

The quantum error probability calculation schemes to be compared are the following three schemes.
- brute force (BF): naive sampling
- importance sampling(ISA)
- importance splitting(ISP)

In the BF, a predetermined number of error patterns is generated without particularly considering efficiency of processing, decoding is performed for all the error patterns, and a logical error probability is calculated based on the decoding results. The ISA is a method of intensively sampling rare events.

In the ISA, error patterns that rarely occur are mainly generated. Details of the ISA are described in J. Geweke, "Bayesian Inference in Econometric Models Using Monte Carlo Integration", Econometrica, Vol. 57, No. 6, November 1989, pp. 1317-1339.

The ISP is a method of obtaining the probability of a range in which sampling is difficult by extrapolation. Details of the ISP are described in "M. Garvels and D. Kroese, "A comparison of RESTART implementations", WSC '98: Proceedings of the 30th conference on Winter simulation, December 1998, Pages 601-608".

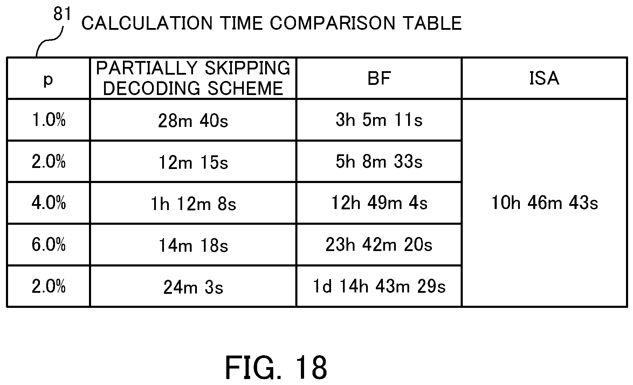

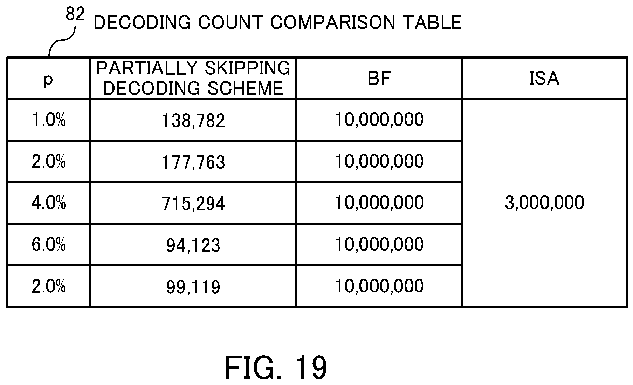

FIGS. 18 and 19 represent the results of measuring the calculation time and the number of times of decoding until the logical error probability is calculated with a certain accuracy by each logical error probability calculation scheme. The accuracy standard is within the range of the 95% confidence interval of the logical error probability calculated by BF. As a decoding method, a minimum weight perfect matching (MWPM) algorithm is used.

Other simulation conditions are the code distance d = 11 and the physical error probabilities p = 1.0, 2.0, 4.0, 6.0, and 8.0%. The number of BF samples is 10 million. The number of samples in the partially skipping decoding scheme is the number for satisfying the above accuracy standard, and differs for each physical error probability p.

FIG. 18 illustrates an example of measurement results of calculation time. A calculation time comparison table 81 presents the calculation time for each physical error probability in the partially skipping decoding scheme, the BF, and the ISA. Since the ISA calculates the logical error probability for any physical error probability in one set of calculation, the calculation time of the one set is listed. In the ISP, sufficient calculation accuracy is not obtained under the condition of the physical error probability p ≥ 1, and the ISP is therefore excluded from comparison of the calculation time.

As presented in the calculation time comparison table 81, the calculation time of the partially skipping decoding scheme is reduced to 1/6 at p = 1.0% and 1/10 at p = 2.0% as compared with the BF. Further, the calculation time of the partially skipping decoding scheme is 1/4 or less of that of the ISA.

FIG. 19 illustrates an example of results of decoding counts. A decoding count comparison table 82 presents the calculation time for each physical error probability in the partially skipping decoding scheme, the BF, and the ISA. Since the ISA calculates the logical error probability for any physical error probability in one set of calculation, the number of times of decoding for the one set is listed. In the ISP, sufficient calculation accuracy is not obtained under the condition of the physical error probability p ≥ 1, and the ISP is therefore excluded from comparison of the decoding counts.

According to the decoding count comparison table 82, the decoding count of the partially skipping decoding scheme is 1/10 or less for all the physical error probabilities p as compared with the BF. The decoding count of the partial decoding omission method is 1/3 or less of that of the ISA.

In this way, the calculation amount is reduced by applying the partially skipping decoding scheme, and as a result, the calculation time is shortened. In addition, even if decoding is skipped for error patterns that are less likely to have quantum errors, a decrease in the calculation accuracy of the logical error probabilities is small.

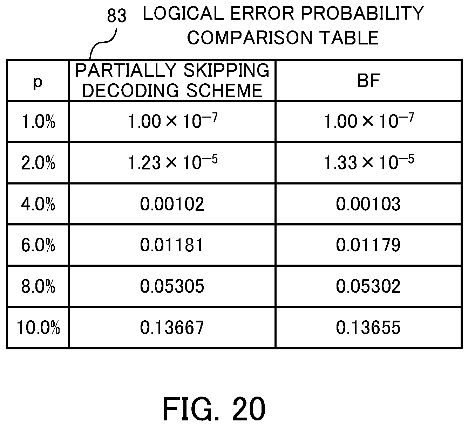

FIG. 20 illustrates an example of calculation results of logical error probabilities. A logical error probability comparison table 83 lists the logical error probability for each physical error probability in the partially skipping decoding scheme and the BF. Each logical error probability in the logical error probability comparison table 83 is an average value of logical error probabilities when calculation of ten million samples is performed three times. As presented in the logical error probability comparison table 83, assuming that the logical error probabilities of the BF are correct, errors in the logical error probabilities of the partially skipping decoding scheme are minute.

In the partially skipping decoding scheme, decoding is skipped when each error pattern satisfies a predetermined determination criterion. However, some determination criteria, even if satisfied, have a small chance of resulting in logical errors as a result of decoding.

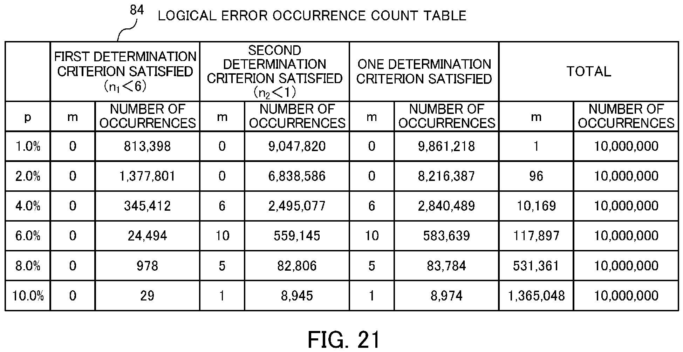

FIG. 21 illustrates an example of probabilities of a logical error occurrence when each determination criterion is satisfied. A logical error occurrence count table 84 lists the number of error patterns that satisfy each determination criterion together with the logical error occurrence number m when the determination criterion is satisfied. The logical error occurrence number m when the determination criterion is satisfied is a value counted by determining whether a logical error occurs without skipping decoding even when the determination criterion is satisfied.

When the first determination criterion is satisfied, no logical error occurs upon decoding. When the second determination criterion is satisfied, some logical errors occur when the physical error probability is 4.0% or more. The logical error occurrence number m when only one of the first determination criterion and the second determination criterion is satisfied is the same as the corresponding value when the second determination criterion is satisfied.

The numbers of occurrences under "total" in the logical error occurrence count table 84 are each the total number of error patterns generated as targets of the quantum error correction. Each logical error occurrence number m under "total" is the number of logical error occurrences among all error patterns including those not satisfying the determination criteria.

In this way, even if the first determination criterion is applied to skip decoding, logical error occurrences are not overlooked. In addition, when the second determination criterion is applied in order to skip decoding, logical errors may be overlooked in cases where the physical error probability p is 4.0% or more, but the number of logical error occurrences is remarkably small compared to the overall number of logical errors. Therefore, a decrease in the calculation accuracy of the logical error probabilities due to the application of the second determination criterion is small.

### Other Embodiments

In the second embodiment, the calculation of the logical error probability of Z errors and the calculation of the logical error probability of X errors are separately described, but these calculation processes may be continuously performed.

Depending on the calculation accuracy asked for the logical error probabilities, the first determination criterion or the second determination criterion may be relaxed. For example, when the code distance is sufficiently large and the calculation accuracy being asked is not strict, the upper limit of the maximum number of errors in the same row or the same column may be relaxed from "1" to "2" in the second determination criterion.

The foregoing merely illustrates the principles of the invention. Further, many modifications and variations are possible for those skilled in the art, and the present invention is not limited to the exact construction and application examples shown and described above, and all corresponding modifications and equivalents are deemed to be within the scope of the present invention as defined by the appended claims and their equivalents.

### Reference Signs List

1 simulation condition
2 to 4 error pattern
10 information processing apparatus
11 storing unit
12 processing unit

## Claims

1. A computer simulation program that causes a computer to execute a process comprising:
generating an error pattern indicating one or more first data qubits to which errors are introduced among a plurality of data qubits included in a two-dimensional lattice in which the plurality of data qubits and a plurality of ancilla qubits are alternately arranged in each of a row direction and a column direction;
determining whether the one or more first data qubits indicated by the error pattern satisfy a predetermined determination criterion;
determining, upon determining that the one or more first data qubits satisfy the predetermined determination criterion, that a logical error does not occur in the error pattern; and
determining, upon determining that the one or more first data qubits fail to satisfy the predetermined determination criterion, whether the logical error occurs based on error detection information in which ancilla qubits adjacent, in the row direction or the column direction, to the one or more first data qubits indicated in the error pattern have flipped states.

2. The computer simulation program according to claim 1, wherein the determining of whether the one or more first data qubits satisfy the predetermined determination criterion includes determining whether a first determination criterion is satisfied that a number of the one or more first data qubits is equal to or less than a value corresponding to a size of the two-dimensional lattice.

3. The computer simulation program according to claim 2, wherein the value corresponding to the size of the two-dimensional lattice is a half of a value obtained by subtracting 1 from a minimum value of a number of the plurality of data qubits included in one side of the two-dimensional lattice.

4. The computer simulation program according to one of claims 1 to 3, wherein the determining of whether the one or more first data qubits satisfy the predetermined determination criterion includes determining whether a second determination criterion is satisfied that a maximum value of a number of first data qubits included in a same row or a same column of the two-dimensional lattice among the one or more first data qubits is equal to or less than a predetermined value.

5. A simulation method executed by a computer, the simulation method comprising:
generating an error pattern indicating one or more first data qubits to which errors are introduced among a plurality of data qubits included in a two-dimensional lattice in which the plurality of data qubits and a plurality of ancilla qubits are alternately arranged in each of a row direction and a column direction;
determining, by a processor, whether the one or more first data qubits indicated by the error pattern satisfy a predetermined determination criterion;
determining, by the processor, upon determining that the one or more first data qubits satisfy the predetermined determination criterion, that a logical error does not occur in the error pattern; and
determining, by the processor, upon determining that the one or more first data qubits fail to satisfy the predetermined determination criterion, whether the logical error occurs based on error detection information in which ancilla qubits adjacent, in the row direction or the column direction, to the one or more first data qubits indicated in the error pattern have flipped states.

6. An information processing apparatus comprising processing means for executing a process including:
generating an error pattern indicating one or more first data qubits to which errors are introduced among a plurality of data qubits included in a two-dimensional lattice in which the plurality of data qubits and a plurality of ancilla qubits are alternately arranged in each of a row direction and a column direction;
determining whether the one or more first data qubits indicated by the error pattern satisfy a predetermined determination criterion;
determining, upon determining that the one or more first data qubits satisfy the predetermined determination criterion, that a logical error does not occur in the error pattern; and
determining, upon determining that the one or more first data qubits fail to satisfy the predetermined determination criterion, whether the logical error occurs based on error detection information in which ancilla qubits adjacent, in the row direction or the column direction, to the one or more first data qubits indicated in the error pattern have flipped states.
